# EUROPÄISCHE PATENTANMELDUNG

(11) **EP 4 011 699 A1**
(43) Veröffentlichungstag der Anmeldung: **15.06.2022**
(21) Anmeldenummer: 21212757.5
(22) Anmeldetag: 07.12.2021
(51) Int. Cl.: B60P 1/64, B60P 9/00, B62D 55/06, B66F 9/06, B66F 9/075

(54) **HÖHENVERSTELLBARER SCHLACKENTRANSPORTER**

(30) Priorität: 10.12.2020 DE 102020007557
(71) Anmelder: TML Technik GmbH, 40789 Monheim am Rhein (DE)
(72) Erfinder: Mikat, Christof, 40789 Monheim am Rhein, Germany (DE); Reif, Johannes, 40595 Duesseldorf (DE)
(74) Vertreter: Pommerin, Christian Andreas Valentin

(57) **Zusammenfassung**

Die Erfindung betrifft einen selbstangetriebenen Schlackentransporter für metallurgische Transportportbehälter, die insbesondere Schlackenbehälter sind, wobei der Schlackentransporter ausgebildet ist, um unter den Transportbehälter positioniert zu werden, diesen anzuheben, zu transportieren und wieder abzustellen. Die Erfindung richtet sich ferner auf ein Transportsystem mit einem selbstangetriebenen Schlackentransporter und einem metallurgischen Transportbehälter.

## Beschreibung

### Gebiet der Erfindung

Die Erfindung betrifft einen selbstangetriebenen Schlackentransporter für metallurgische Transportportbehälter, die insbesondere Schlackenbehälter sind, wobei der Schlackentransporter ausgebildet ist, um unter den Transportbehälter positioniert zu werden, diesen anzuheben, zu transportieren und wieder abzustellen. Die Erfindung richtet sich ferner auf ein Transportsystem mit einem selbstangetriebenen Schlackentransporter und einem metallurgischen Transportbehälter.

### Technologischer Hintergrund der Erfindung

Bei der Herstellung von Stahl fallen große Mengen von flüssiger Schlacke an, die transportiert und anschließend weiterverarbeitet werden. Die Schlacke wird dazu in einen metallurgischen Transportbehälter, der auch als Schlackenbehälter oder Schlackenkübel bekannt ist, gefüllt, der bis zu 100 t Schlacke aufnehmen kann. Nach der Befüllung wird der Transportbehälter im Stahlwerk transportiert, damit die Schlacke anschließend weiterverarbeitet werden kann. Hierbei stellen die extrem hohe Temperatur der zu transportierenden Schlacke von mehr als 1000 °C und das hohe Gewicht Schwierigkeiten dar. Ferner sind die Räumlichkeiten in einem Stahlwerk meist sehr beengt und der Boden sehr uneben, so dass der Transport von flüssiger Schlacke eine Herausforderung darstellt.

Im Stand der Technik sind Schlackentransporter bekannt. DE 100 08 637 A1 lehrt einen Schlackentransporter, der einen Behälter mit heißer Schlacke aufnehmen, transportieren und auskippen kann. Hierzu dient eine Kippvorrichtung, die am Transporter angebracht ist. Das Dokument DE 229 15 547 U1 offenbart einen Schlackentransporter mit Rädern, der Transportbehälter mit flüssiger Schlacke aufnehmen kann. Hierzu weist dieser Schlackentransporter Kipparme mit Tragzapfen auf. Um den Schlackenbehälter von einem erhöhten Standort aufnehmen zu können, umfasst dieser Schlackentransporter ferner mindestens eine höhenverstellbare Achseneinrichtung, die den Schlackentransporter in eine Schräglage bringt. Die Kipparme schwenken nach der Aufnahme des Schlackenbehälters zurück, sodass der Behälter auf dem Transporter abgestellt und transportiert werden kann. Die Offenlegungsschriften DE 20 02 080 A und DE 17 55 833 A offenbaren jeweils einen Schlackentransporter mit Rädern und einem Gestellrahmen aus zwei parallelen Rahmenseiten, die nur an einem Ende durch ein querverlaufenden Rahmenteil fest miteinander verbunden sind. Der querverlaufende Rahmenteil trägt einen Führerstand. Der Gestellrahmen ist höhenverstellbar und dient zur Aufnahme von Schlackenbehältern, die transportiert und abgestellt werden können. Diese Konstruktionen sind von Nachteil, da die aufzunehmenden Behälter eine bestimmte Breite aufweisen müssen, um mit dem Gestellrahmen des Schlackentransporters kompatibel zu sein. US 2008/0253872 A1 beschreibt einen Anhänger mit Rädern mit einer ähnlichen U-Form. Die Hubvorrichtung dient zur Aufnahme und zum Abstellen der Behälter, die auf dem Boden abgestellt sind. Schließlich beschreibt CN 210236898 U einen Schlackentransporter, der auf Schienen fährt und mittels einer Kette und einer Schaufel unter sich befindliche Schlacke aufnehmen und transportieren kann.

Diese bekannten Schlackentransporter weisen jedoch den Nachteil auf, dass sie bauartbedingt schlecht manövrierbar sind. So sind viele zeitaufwendige und umständliche Rangiermanöver beim Fahren solcher Schlackentransporter üblich, um die Schlacke zu transportieren. Ferner sind viele Transporter dazu nicht in der Lage, schwere Lasten zu transportieren, insbesondere nicht im unwegsamen Gelände eines Stahlwerkes. Diese verlangsamen die Arbeitsabläufe und mindern die Effizienz eines Stahlwerks.

Daher besteht der Bedarf an einem selbstangetriebenen Schlackentransporter für metallurgische Transportportbehälter, der es ermöglicht, in engen Raumverhältnissen solche Transportbehälter mit flüssiger Schlacke sicher und schnell zu transportieren und der darüber hinaus handhabbar ist.

### Aufgabenstellung und Kurzbeschreibung der Erfindung

Der Erfindung liegt die technische Aufgabe zugrunde, einen selbstangetriebenen Schlackentransporter für metallurgische Transportportbehälter bereitzustellen, der handhabbar ist und es ermöglicht, in engen Raumverhältnissen solche Transportbehälter mit flüssiger Schlacke sicher und schnell zu transportieren.

Die technische Aufgabe wird gelöst durch einen selbstangetrieben Schlackentransporter des Anspruchs 1 und durch das Transportsystem nach Anspruch 7. Weitere vorteilhafte Ausführungsformen sind in den Unteransprüchen angegeben.

Daher richtet sich in einem Aspekt die Erfindung auf einen selbstangetriebenen Schlackentransporter umfassend einen Antrieb, ein Fahrwerk, insbesondere mit zumindest zwei Kettenlaufwerken, eine Hubvorrichtung mit zumindest einem Hubantrieb und eine Aufnahmevorrichtung zur Aufnahme eines metallurgischen Transportbehälters, insbesondere eines Schlackenbehälters dadurch gekennzeichnet, dass die Aufnahmevorrichtung durch die Hubvorrichtung höhenverstellbar ausgebildet ist.

In einem weiteren Aspekt betrifft die Erfindung ein Transportsystem mit einem Schlackentransporter wie hierin beansprucht und einem metallurgischen Transportbehälter, insbesondere eines Schlackenbehälters, wobei der Schlackentransporter derart ausgebildet ist, dass er beidseitig unter den metallurgischen Transportbehälter positioniert werden kann, diesen anheben und transportieren kann.

Der erfindungsgemäße Schlackentransporter weist hervorragende Eigenschaften auf. Insbesondere weist der Schlackentransporter im Vergleich zu etablierten Schlackentransportern eine geringere Grundfläche auf, ist platzsparend und daher handhabbarer.

### Beschreibung

Der hierin beschriebene Schlackentransporter ist selbstangetrieben und umfasst einen Antrieb sowie ein Fahrwerk. Der Antrieb und das Fahrwerk wirken so zusammen, dass der Schlackentransporter sich bewegen kann. Der Antrieb kann jeder bekannte Antrieb sein, der bekannt und hierfür geeignet ist, beispielsweise ein Dieselmotor, Elektromotor, optional mit einem Akkumulator, oder ein Wasserstoffantrieb. Das Fahrwerk weist zumindest zwei Kettenlaufwerke auf. Dadurch weist der Schlackentransporter vergleichsweise große Aufstandsflächen auf und somit eine vergleichsweise große Traktion. Dies ist in einem unwegsamen Gelände wie in einem Stahlwerk vorteilhaft, um schwere Lasten zu transportieren. Darüber hinaus können die zumindest zwei Kettenlaufwerke in entgegengesetzte Richtungen fahren, so dass der Schlackentransporter sich auf der Stelle drehen kann und somit wendiger und leichter manövrierbar ist.

Der Schlackentransporter weist ferner eine Hubvorrichtung mit zumindest einem Hubantrieb auf. Die Hubvorrichtung kann hydraulisch, mechanisch oder elektrisch betrieben werden.

Der Schlackentransporter umfasst eine Aufnahmevorrichtung zur Aufnahme eines metallurgischen Transportbehälters, wobei die Aufnahmevorrichtung durch die Hubvorrichtung höhenverstellbar ist. Die Aufnahmevorrichtung weist bevorzugt eine im Wesentlichen ebene Aufnahmefläche auf. Im Sinne der Anmeldung bedeutet "eine im Wesentlichen ebene Aufnahmefläche", dass diese plattenförmig ausgestaltet sein kann. Die Aufnahmevorrichtung kann Aussparungen aufweisen. Die Aufnahmevorrichtung kann einen herausnehmbaren Teil aufweisen, so dass die Wartung des Schlackentransporters vereinfacht wird.

Der metallurgische Transportbehälter kann vorzugsweise so ausgestaltet sein, dass er zur Aufnahme von Schlacken, metallurgischen Erzeugnissen und Schlackenrohstoffen, sowohl in kalter als auch in heißer bzw. flüssiger Form geeignet ist. Der Transportbehälter kann jeder hierfür geeignete Behälter sein wie ein Schlackenbehälter oder ein bekannter Schlackenkübel. Im Sinne der Erfindung wird unter "Schlacken" die Schlacken gemäß DIN 4301 verstanden. Hierzu gehören beispielweise Eisenhüttenschlacke wie Hochofenschlacke, Stahlwerkschlacke wie Konverterschlacke, Elektroofenschlacke, Edelstahlschlacke, sekundärmetallurgische Schlacke und Metallhüttenschlacke.

Der Schlackentransporter ist vorzugsweise so beschaffen, dass er in heißer Umgebung wie in einem Stahlwerk funktionstüchtig ist und den hohen Temperaturen und den mechanischen und chemischen Belastungen dauerhaft Stand halten kann.

Der Schlackentransporter ist insbesondere von der Höhe und Breite so dimensioniert, dass er unterhalb eines Transportbehälters positioniert werden kann und die Höhe der Aufnahmevorrichtung mittels der Hubvorrichtung derart verändert werden kann, dass der metallurgische Transportbehälter angehoben werden kann, so dass er mit der Standfläche nicht mehr in Kontakt steht, transportiert und wieder abgestellt werden kann. Dabei ist die Grundfläche größer als die des metallurgischen Transportbehälters. Durch die verhältnismäßig kleinen Dimensionen ist der Schlackentransporter handlich in den engen Verhältnissen eines Stahlwerks. Beim Transport der metallurgischen Transportbehälter werden beim erfindungsgemäßen Schlackentransporter weniger Rangiermanöver benötigt, als bei bekannten Schlackentransportern.

Bevorzugt ist der Schlackentransporter von der Höhe und Breite so dimensioniert, dass er unterhalb eines metallurgischen Transportbehälters positioniert werden kann und die Höhe der Aufnahmevorrichtung mittels der Hubvorrichtung derart verändert werden kann, dass der metallurgische Transportbehälter angehoben werden kann, so dass er mit der Standfläche nicht mehr in Kontakt steht, transportiert und wieder abgestellt werden kann. Dabei ist die Grundfläche identisch mit der Grundfläche des metallurgischen Transportbehälters. Dadurch ist der Schlackentransporter besonders handhabbar.

Besonders bevorzugt ist der Schlackentransporter von der Höhe und Breite so dimensioniert, dass er unterhalb eines metallurgischen Transportbehälters positioniert werden kann und die Höhe der Aufnahmevorrichtung mittels der Hubvorrichtung derart verändert werden kann, dass der metallurgische Transportbehälter angehoben werden kann, so dass er mit der Standfläche nicht mehr in Kontakt steht, transportiert und wieder abgestellt werden kann. Dabei ist die Grundfläche des Schlackentransporters kleiner als die Grundfläche des metallurgischen Transportbehälters. Wenn der Schlackentransporter unterhalb des metallurgischen Transportbehälters positioniert ist, so vergrößert er dessen Grundfläche nicht. Dadurch ist diese Ausführungsform des Schlackentransporters die handhabbarste.

"Grundfläche des Schlackentransporters", wie hierin verwendet, bezieht sich auf die Fläche unterhalb des Schlackentransporters auf ebenem Boden betrachtet aus der Draufsicht.

"Grundfläche des metallurgischen Transportbehälters", wie hierin verwendet, bezieht sich auf die Fläche unterhalb des metallurgischen Transportbehälters auf ebenem Boden betrachtet aus der Draufsicht.

In einer bevorzugten Ausführungsform der Erfindung ist zur Höhenverstellung der Aufnahmevorrichtung der zumindest eine, vorzugsweise jeder, Hubantrieb der Hubvorrichtung mit der Aufnahmevorrichtung und dem Fahrwerk verbunden, so dass die Aufnahmevorrichtung höhenverstellbar ist. Die Aufnahmevorrichtung kann rein rotatorisch höhenverstellbar sein, ist bevorzugt rein translatorisch höhenverstellbar.

Vorzugsweise weist die Hubvorrichtung vier Hubantriebe auf. Hierdurch kann ein gleichförmiges Anheben des Transportbehälters erreicht und ein Überschwappen des Behälters erreicht werden.

In einer bevorzugten Ausgestaltung der Erfindung ist der Schlackentransporter dazu ausgelegt, eine Last von bis zu 100 t, bevorzugt bis zu 80 t aufzunehmen und zu transportieren. Hierdurch lässt sich eine ausreichende Menge Schlacke transportieren.

In einer noch weiteren bevorzugten Ausführungsform der Erfindung ist die Aufnahmevorrichtung durch die Hubvorrichtung um 1 cm bis 60 cm, bevorzugt 10 cm bis 45 cm und noch bevorzugter 20 cm bis 30 cm höhenverstellbar ausgebildet.

In einem weiteren Aspekt betrifft die Erfindung ein Transportsystem mit einem selbstangetriebenen Schlackentransporter wie hierin beschrieben und einem metallurgischen Transportbehälter, insbesondere ein Schlackenbehälter, wobei der Schlackentransporter derart ausgebildet ist, dass er beidseitig unter dem metallurgischen Transportbehälter positioniert werden kann, diesen anheben und transportieren kann. "Beidseitig" wie hierin verwendet, bedeutet, dass der Schlackentransporter von vorne und von hinten, unter dem metallurgischen Transportbehälter positioniert werden kann. Dies kann beispielsweise dadurch erreicht werden, dass der metallurgische Transportbehälter Mittel wie Wände oder Stützbeine aufweist, die den Transportbehälter vom Boden beabstanden.

In einer weiteren bevorzugten Ausführungsform umfasst das Transportsystem eine Fernsteuerung, die dazu geeignet ist, von einem Bediener getragen zu werden, der sich neben dem Schlackentransporter befindet, wobei die Fernsteuerung über eine Funkverbindung oder mittels eines Kabels mit zumindest einer elektronischen Einheit in dem Schlackentransporter verbindbar ist. Die Funkverbindung kann als WLan, Bluetooth oder gemäß einem anderen Übertragungsstandard hergestellt werden. Hierdurch wird die Handhabung sicherer gestaltet.

Vorzugsweise weist der metallurgische Transportbehälter an der Unterseite Mittel auf, so dass der metallurgische Transportbehälter derart vom Boden beabstandet ist, dass der Schlackentransporter bevorzugt beidseitig unter dem metallurgischen Transportbehälter positioniert werden kann, um diesen durch Höhenverstellung der Aufnahmevorrichtung anzuheben. Diese Mittel können Wände oder Stützbeine sein. Bevorzugt sind die Mittel Stützbeine.

In einer weiteren bevorzugten Ausführungsform weist der Schlackentransporter des Transportsystems zumindest eine erste Positionierungseinheit auf, die dazu ausgebildet ist, den Schlackentransporter in Transportposition unter dem metallurgischen Transportbehälter zu positionieren, so dass dieser angehoben und transportiert werden kann. Die Positionierungseinheit kann elektronisch oder formschlüssig sein. Hierdurch wird die Positionierung des Schlackentransporters zum Transport des Transportbehälters erleichtert.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Numerische Bereiche, die in dem Format "von x bis y" angegeben sind, schließen die genannten Werte ein sowie die Werte, die im Bereich der dem Fachmann bekannten jeweiligen Messgenauigkeit liegen.

Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Zur besseren Veranschaulichung wird nachfolgend ein Ausführungsbeispiel anhand der Figuren beschrieben.

### Es zeigen

**Figur 1** eine schematische perspektivische Ansicht des Schlackentransporters **1**, wobei die Hubvorrichtung **4** auf die niedrigste Höhe eingestellt ist;
**Figur 2** eine schematische perspektivische Ansicht des Schlackentransporters **1**, wobei die Hubvorrichtung **4** auf die höchste Höhe eingestellt ist;
**Figur 3** eine schematische perspektivische Ansicht des Schlackentransporters **1** mit zwei Hubantrieben **5** und zwei Hubvorrichtungen **4**;
**Figur 4** eine schematische perspektivische Ansicht des Schlackentransporters **1**, wobei die Aufnahmevorrichtung **6** eine Aussparung **14** aufweist, zwei Hubvorrichtungen **4** und zwei Hubantriebe **5.**
**Figur 5** eine schematische perspektivische Ansicht des Transportsystems **8,** wobei der Schlackentransporter **1** unter dem metallurgischen Transportbehälter **9** positioniert ist und der metallurgische Transportbehälter **9** mit zwei Wänden **12** vom Boden beabstandet ist;
**Figur 6** einen metallurgischen Transportbehälter **9,** der mit Stützbeinen **11** vom Boden beabstandet ist.

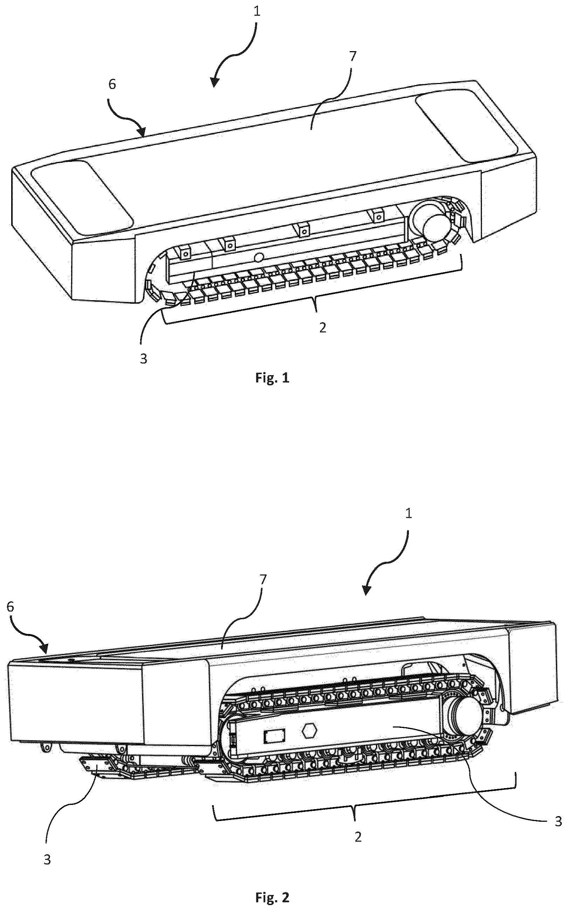

**Figur 1** zeigt einen Schlackentransporter **1** mit einem Antrieb, einem Fahrwerk **2** mit zwei Kettenlaufwerken, wobei nur ein Kettenlaufwerk **3** zu sehen ist. Das Kettenlaufwerk 3 und das verdeckte Kettenlaufwerk sind parallel zueinander angeordnet. Ferner weist der Schlackentransporter **1** eine Aufnahmevorrichtung **6** auf, welche eine im Wesentlichen flache Aufnahmefläche **7** aufweist. Die Aufnahmevorrichtung **6** ist hierbei auf die niedrigste Höhe eingestellt, so dass der Schlackentransporter **1** ohne mit dem metallurgischen Transportbehälter in Kontakt zu kommen, unterhalb des metallurgischen Transportbehälters positioniert werden kann. Der Antrieb sowie die Hubvorrichtung mit zumindest einem Hubantrieb sind im Schlackentransporter **1** angeordnet und in der **Figur 1** nicht abgebildet. Der Schlackentransporter **1** ist dazu ausgelegt, eine Last von bis zu 100 t aufzunehmen und zu transportieren

**Figur 2** zeigt den Schlackentransporter **1**, wobei die Aufnahmevorrichtung **6** die maximale Höhe erreicht hat. In dieser Position hat der Schlackentransporter **1** den metallurgischen Transportbehälter angehoben und kann ihn transportieren. Die Aufnahmevorrichtung **6** ist von 1 cm bis zu 60 cm höhenverstellbar ausgebildet.

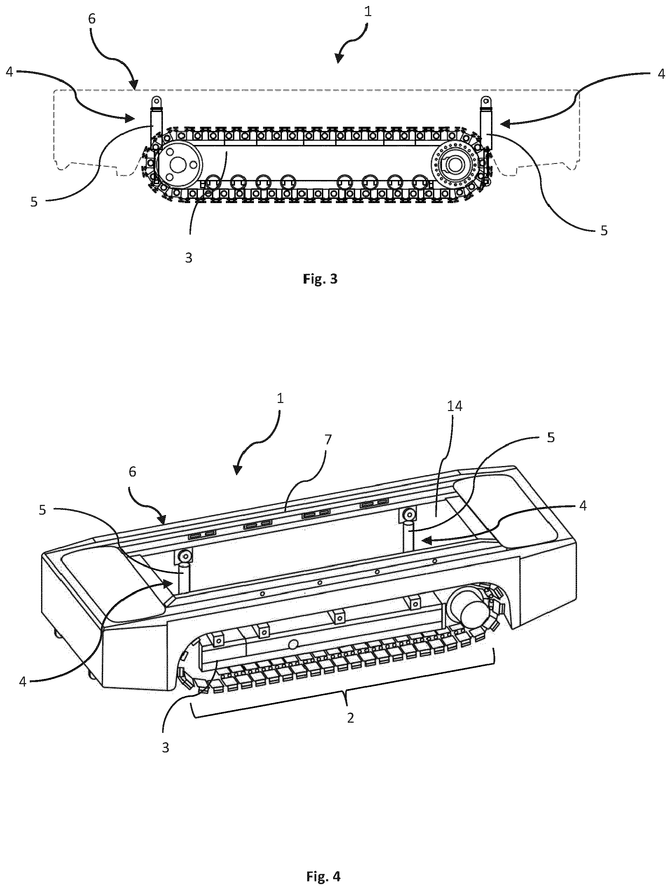

**Figur 3** zeigt schematisch den Schlackentransporter **1** samt zwei innenliegenden Hubantrieben **5** und Hubvorrichtungen **4**, wobei Teile der Hubvorrichtungen **4** vom Kettenlaufwerk **3** verdeckt sind. Weitere zwei Hubantriebe und Hubvorrichtungen befinden sich auf der gegenüberliegenden Seite und werden von den abgebildeten Hubantrieben **5** und Hubvorrichtungen **4** verdeckt. Ein Kettenlaufwerk **3** ist abgebildet und verdeckt das Laufwerk auf der gegenüberliegenden Seite. Die Kettenlaufwerke sind parallel zueinander ausgerichtet. Die Aufnahmevorrichtung **6** ist auf die niedrigste Höhe eingestellt und rein translatorisch höhenverstellbar.

**Figur 4** zeigt den Schlackentransporter **1** mit einem Antrieb, einem Fahrwerk **2** mit zwei Kettenlaufwerken **3**, wobei nur ein Kettenlaufwerk zu sehen ist. Das Kettenlaufwerk **3** und das verdeckte Laufwerk sind parallel zueinander angeordnet. Die Aufnahmevorrichtung **6** weist eine Aussparung **14** auf. Der Hubantrieb **5** und die Hubvorrichtung **4** sind teilweise von der Aufnahmevorrichtung **6** verdeckt. Die Aufnahmevorrichtung **6** ist auf die niedrigste Höhe eingestellt.

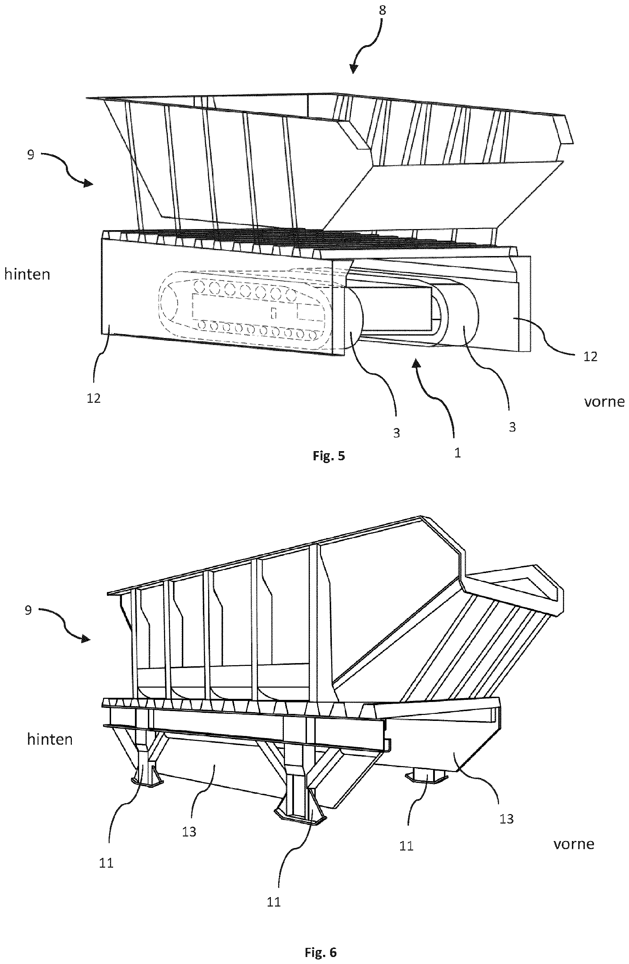

**Figur 5** zeigt das Transportsystem **8** mit dem Schlackentransporter **1** mit zwei Kettenlaufwerken **3** positioniert unterhalb des metallurgischen Transportbehälters **9.** Die Aufnahmevorrichtung und die Aufnahmeflächen sind übersichtshalber nicht abgebildet. Der metallurgische Transportbehälter **9** steht auf zwei Wänden **12** und ist dadurch vom Boden beabstandet. Somit kann der Schlackentransporter **1** beidseitig von vorne und hinten unter dem metallurgischen Transportbehälter **9** positioniert werden. Der Schlackentransporter **1** kann von vorne unter den Transportbehälter **9** positioniert werden, den Transportbehälter **9** anheben, transportieren, abstellen und unter dem Behälter hindurchfahren. Dies ist gegenüber dem Stand der Technik vorteilhaft, da dadurch die Transportbehälter platzsparender, beispielswiese in Reihe, abgestellt werden können. Der Schlackentransporter **1** wird durch die vordere Wand der zwei Wände **12** verdeckt und ist deshalb zum Teil gestrichelt dargestellt. Der metallurgische Transportbehälter **9** weist eine eckige Form auf und ist oben offen. Der metallurgische Transportbehälter **9** ist so ausgebildet, dass er sowohl kalte als auch heiße bzw. flüssige Schlacke aufnehmen kann.

**Figur 6** zeigt einen metallurgischen Transportbehälter **9**, die mit Stützbeinen **11** vom Boden beabstandet ist. Blenden **13** sind an der Seite angebracht. Der Schlackentransporter **1** kann beidseitig von vorne und hinten unter dem metallurgischen Transportbehälter **9** positioniert werden. Der metallurgische Transportbehälter **9** weist eine eckige Form auf und ist oben offen. Der metallurgische Transportbehälter **9** ist so ausgebildet, dass er sowohl kalte als auch heiße bzw. flüssige Schlacke aufnehmen kann.

## Patentansprüche

1. Selbstangetriebener Schlackentransporter (1) umfassend
einen Antrieb, ein Fahrwerk (2),
eine Hubvorrichtung (4) mit zumindest einem Hubantrieb (5) und
eine Aufnahmevorrichtung (6) zur Aufnahme eines metallurgischen Transportbehälters, insbesondere eines Schlackenbehälters, wobei die Aufnahmevorrichtung (6) durch die Hubvorrichtung (4) höhenverstellbar ausgebildet ist, **dadurch gekennzeichnet, dass**
das Fahrwerk (2) zumindest zwei Kettenlaufwerke (3) aufweist.

2. Selbstangetriebener Schlackentransporter (1) nach Anspruch 1, **dadurch gekennzeichnet, dass**
zur Höhenverstellung der Aufnahmevorrichtung (6) der zumindest eine, vorzugsweise jeder, Hubantrieb (5) der Hubvorrichtung (4) mit der Aufnahmevorrichtung (6) und dem Fahrwerk (2) verbunden ist, so dass die Aufnahmevorrichtung (6) höhenverstellbar, bevorzugt rein translatorisch höhenverstellbar, ist.

3. Selbstangetriebener Schlackentransporter (1) nach Anspruch 1 oder 2, **dadurch gekennzeichnet, dass**
die Hubvorrichtung (4) vier Hubantriebe (5) aufweist und/oder;
die Grundfläche des Schlackentransporters (1) höchstens genauso groß ist wie die Grundfläche des Schlackenbehälters.

4. Selbstangetriebener Schlackentransporter (1) nach einem der vorhergehenden Ansprüche, **dadurch gekennzeichnet, dass**
die Aufnahmevorrichtung (6) eine im Wesentlichen ebene Aufnahmefläche (7) aufweist.

5. Selbstangetriebener Schlackentransporter (1) nach einem der vorhergehenden Ansprüche, **dadurch gekennzeichnet, dass**
der Schlackentransporter (1) dazu ausgelegt ist, eine Last von bis zu 100 t, bevorzugt bis zu 80 t aufzunehmen und zu transportieren.

6. Selbstangetriebener Schlackentransporter (1) nach einem der vorhergehenden Ansprüche, **dadurch gekennzeichnet, dass**
die Aufnahmevorrichtung (6) durch die Hubvorrichtung (4) um 1 cm bis 60 cm, bevorzugt 10 cm bis 45 cm und noch bevorzugter 20 cm bis 30 cm höhenverstellbar ausgebildet ist; und/oder
der Schlackentransporter (1) von der Höhe und Breite so dimensioniert ist, dass er unterhalb des metallurgischen Transportbehälters positionierbar ist und die Höhe der Aufnahmevorrichtung mittels der Hubvorrichtung (4) derart veränderbar ist, dass der metallurgische Transportbehälter anhebbar ist, so dass der metallurgische Transportbehälter mit der Standfläche nicht mehr in Kontakt steht, transportierbar und wieder abstellbar ist, und insbesondere der Schlackentransporter (1) bei einer vorderen Seite und einer hinteren Seite herausfahrbar ist.

7. Transportsystem (8) mit einem selbstangetriebenen Schlackentransporter (1) nach einem der vorhergehenden Ansprüche und einem metallurgischen Transportbehälter (9), insbesondere ein Schlackenbehälter, wobei der Schlackentransporter (1) derart ausgebildet ist, dass er beidseitig, unter dem metallurgischen Transportbehälter (9) positioniert werden kann, diesen anheben und transportieren kann.

8. Transportsystem (8) nach Anspruch 7, **dadurch gekennzeichnet, dass** das Transportsystem (8) eine Fernsteuerung umfasst, die dazu geeignet ist, von einem Bediener getragen zu werden, der sich neben dem Schlackentransporter (1) befindet, wobei die Fernsteuerung über eine Funkverbindung oder mittels eines Kabels mit zumindest einer elektronischen Einheit in dem Schlackentransporter (1) verbunden werden kann.

9. Transportsystem (8) nach einem der Ansprüche 7 bis 8, **dadurch gekennzeichnet, dass**
der metallurgische Transportbehälter (9) an der Unterseite Mittel (10), bevorzugt Stützbeine (11), aufweist, so dass der metallurgische Transportbehälter (9) derart vom Boden beabstandet ist, dass der Schlackentransporter (1) beidseitig unter dem metallurgischen Transportbehälter (9) positioniert werden kann, um diesen durch Höhenverstellung der Aufnahmevorrichtung (6) anzuheben.

10. Transportsystem nach einem der Ansprüche 7 bis 9, **dadurch gekennzeichnet, dass** der Schlackentransporter (1) zumindest eine erste Positionierungseinheit aufweist, die dazu ausgebildet ist, den Schlackentransporter (1) in Transportposition unter dem metallurgischen Transportbehälter (9) zu positionieren, so dass dieser angehoben und transportiert werden kann.
